# DEMANDE DE BREVET EUROPEEN

(11) **EP 3 553 112 A1**
(43) Date de publication de la demande: **16.10.2019**
(21) Numéro de dépôt: 18205496.5
(22) Date de dépôt: 06.08.2009
(51) Int. Cl.: C08G 69/26, C08G 69/28, C08G 69/36, C08L 77/06, B32B 27/34, C08J 3/12, C08K 3/32

(54) **POLYAMIDE SEMI-AROMATIQUE À TERMINAISON DE CHAÎNE**

(30) Priorité: 08.08.2008 FR 0855501; 03.10.2008 FR 0856705
(62) Demande divisionnaire de: 15171588.5
(71) Demandeur: Arkema France, 92700 Colombes (FR)
(72) Inventeur: BRIFFAUD, Thierry, 27300 BERNAY (FR); BLONDEL, Philippe, 27300 BERNAY (FR)
(74) Mandataire: Bandpay & Greuter

(57) **Abrégé**

L'invention porte sur un copolyamide comprenant au moins deux motifs distincts répondant à la formulation générale suivante :

A/X.T

A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18 ;
X.T désigne un motif obtenu à partir de la polycondensation d'une diamine en Cx et de l'acide téréphtalique, avec x représentant le nombre d'atomes de carbone de la diamine en Cx, x étant compris entre 9 et 36, avantageusement entre 10 et 18,
caractérisé en ce que ledit copolyamide présente :
-une teneur en fins de chaîne amine supérieure ou égale à 20µeq/g,
-une teneur en fins de chaîne acide inférieure ou égale à 100 µeq/g, et
-une teneur en fins de chaîne non réactive supérieure ou égale à 20 µeq/g,
ainsi que le procédé de préparation dudit copolyamide, une composition comprenant ce polyamide ainsi que l'utilisation de ce polyamide et d'une telle composition.

## Description

### [Domaine de l'invention]

La présente invention a pour objet un copolyamide semi-aromatique, son procédé de préparation, ainsi que ses utilisations, notamment dans la fabrication d'objets divers, comme des biens de consommation courante tels que des équipements électriques, électroniques ou automobiles, du matériel chirurgical, de l'emballage ou encore des articles de sport.

L'invention se rapporte également à une composition comprenant un tel copolyamide ainsi qu'aux utilisations de cette composition, notamment dans la fabrication de tout ou partie des objets qui viennent d'être énumérés ci-dessus.

### [L'art antérieur et le problème technique]

Il est connu de l'art antérieur d'utiliser des composés, tels que les acides monofonctionnels au cours de la synthèse de polyamide. Ces composés sont généralement utilisés pour stopper la polymérisation.

De manière générale, les polyamides comprennent au moins deux motifs répétitifs identiques ou distincts, ces motifs étant formés à partir des deux monomères, ou comonomères, correspondants. Les polyamides sont donc préparés à partir de deux ou plusieurs monomères, ou comonomères, choisis parmi un aminoacide, un lactame et/ou un diacide carboxylique et une diamine.

Par conséquent, suite à la polycondensation, les macromolécules se terminent soit par une fonction amine et une fonction acide, soit par deux fonctions amines ou encore par deux fonctions acides.

Or, il s'est avéré que la maîtrise des fins de chaîne avait un impact direct sur les propriétés du polyamide final. En effet, il a été observé que lors de la formulation du polyamide ou de sa transformation, les fonctions amine et/ou acide portées par les macromolécules ont tendance soit à réagir avec d'autres molécules présentes dans le milieu, comme par exemple des additifs, soit à polymériser entre elles, soit à réagir entre elles.

Ainsi, lorsque le polyamide comporte une teneur en fonctions acide trop élevée, le produit a tendance à se dégrader pendant sa transformation : la viscosité chute lorsque le polyamide se trouve en solution, entraînant de mauvaises propriétés, notamment mécaniques, ayant des incidences dans ses utilisations après transformation et formulation.

De même, lorsque le polyamide comporte une teneur en fonctions amine trop élevée, il a été observé que le produit avait tendance à se réticuler lors de la formulation, puis de la transformation en produit fini, voire même lors de l'utilisation dudit produit à haute température, le rendant impropre à l'usage souhaité.

Si les proportions en fins de chaînes amine sont trop réduites, alors le polyamide ne peut conduire à un alliage homogène avec d'autres polymères, notamment avec des polyoléfines.

Enfin, lorsque les fonctions amine et acide se trouvent en quantité identique, le produit est très délicat à polymériser à l'état fondu ou à l'état solide, sa vitesse de polymérisation étant trop rapide. Le produit polymérise également pendant la transformation en pièce finie et devient trop visqueux. Il ne remplit plus correctement les moules d'injection. Il ne permet pas non plus d'obtenir des pièces extrudées (par exemple tubes) dans des côtes acceptables.

Par conséquent, il existe un réel besoin de maîtriser ces fins de chaîne de manière à améliorer les propriétés des polyamides, c'est-à-dire de manière à obtenir des polyamides plus manipulables au moment de leur transformation.

### [Brève description de l'invention]

De façon surprenante, la demanderesse a trouvé que ces besoins sont atteints avec un copolyamide comprenant au moins deux motifs distincts répondant à la formulation générale suivante :
A/X.T
dans laquelle :
A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18,
X.T désigne un motif obtenu à partir de la polycondensation d'une diamine en Cx et de l'acide téréphtalique, avec x représentant le nombre d'atomes de carbone de la diamine en Cx, x étant compris entre 9 et 36,avantageusement entre 10 et 18,
ledit copolyamide présentant
   - une teneur en fins de chaîne amine supérieure ou égale à 20µeq/g, avantageusement comprise entre 25 et 100 µeq/g, et de préférence comprise entre 30 et 58 µeq/g,
   - une teneur en fins de chaîne acide inférieure ou égale à 100 µeq/g, avantageusement comprise entre 2 et 80 µeq/g, et de préférence comprise entre 15 et 50 µeq/g,
   - une teneur en fins de chaîne non réactive supérieure ou égale à 20 µeq/g, avantageusement supérieure ou égale à 30µeq/g, et de préférence comprise entre 35 et 200 µeq/g.

L'invention porte donc sur le contrôle des trois types de fins de chaîne afin d'obtenir, pendant et après formulation, en présence d'additifs ou non, des propriétés du produit satisfaisantes et des conditions de procédé également satisfaisantes.

La présente invention a également pour objet le procédé de préparation dudit copolyamide.

La présente invention a également pour objet une composition comportant le copolyamide selon l'invention.

La présente invention a enfin pour objet l'utilisation de copolyamide et de la composition selon l'invention pour constituer une structure monocouche ou multicouche.

### [Description détaillée de l'invention]

D'autres caractéristiques, aspects, objets et avantages de la présente invention apparaîtront encore plus clairement à la lecture de la description et des exemples qui suivent.

Selon un premier aspect de l'invention, l'invention porte sur un copolyamide comprenant au moins deux motifs distincts répondant à la formulation générale suivante :
A/X.T
dans laquelle :
A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18
X.T désigne un motif obtenu à partir de la polycondensation d'une diamine en Cx et de l'acide téréphtalique, avec x représentant le nombre d'atomes de carbone de la diamine en Cx, x étant compris entre 9et 36, avantageusement entre 10 et 18,
caractérisé en ce que ledit copolyamide présente :
   - une teneur en fins de chaîne amine supérieure ou égale à 20µeq/g,
   - une teneur en fins de chaîne acide inférieure ou égale à 100 µeq/g,
   - une teneur en fins de chaîne non réactive supérieure ou égale à 20 µeq/g.

Il est précisé que l'expression "compris entre" utilisée dans les paragraphes précédents, mais également dans la suite de la présente description, doit s'entendre comme incluant chacune des bornes mentionnées.

De façon surprenante, la demanderesse a trouvé qu'il fallait contrôler précisément la quantité de fonctions réactives et la quantité de fonctions non réactives.

La teneur en fin de chaîne de chacune des fonctions amine, acide et la fonction non réactive est mesurée de manière classique et connue de l'homme du métier, par RMN (Résonance Magnétique Nucléaire)

De préférence, la teneur en fins de chaîne amine est comprise entre 25 et 100 µeq/g, et de préférence comprise entre 30 et 58 µeq/g.

De préférence, la teneur en fins de chaîne acide comprise entre 2 et 80 µeq/g, et de préférence comprise entre 15 et 50 µeq/g.

De préférence, la teneur en fins de chaîne non réactive est avantageusement supérieure ou égale à 30µeq/g, et de préférence comprise entre 35 et 200 µeq/g.

Concernant plus précisément la signification du motif A, lorsque A représente un aminoacide, il peut être choisi parmi l'acide 9-aminononanoïque (A=9), l'acide 10-aminodécanoïque (A=10), l'acide 10-aminoundécanoïque (A=11), l'acide 12-aminododécanoïque (A=12) et l'acide 11-aminoundécanoïque (A=11) ainsi que ses dérivés, notamment l'acide N-heptyl-11-aminoundécanoïque.

A la place d'un aminoacide, on pourrait également envisager un mélange de deux, trois,... ou plusieurs aminoacides. Toutefois, les copolyamides formés comprendraient alors trois, quatre,... ou plus, motifs, respectivement.

Lorsque A représente un lactame, il peut être choisi parmi la pyrrolidinone, la 2-pipéridinone, l'énantholactame, le caprylolactame, le pelargolactame, le décanolactame, l'undecanolactame, et le lauryllactame (A=12).

De préférence, A désigne un motif obtenu à partir d'un monomère choisi parmi l'acide 10-aminoundécanoïque (noté 11), l'acide amino-11-undécanoïque (noté 11), l'acide amino-12-dodécanoïque (noté 12) et le lauryllactame (noté L12).

Lorsque le motif A est un motif répondant à la formule (diamine en Ca).(diacide en Cb), le motif (diamine en Ca) est choisi parmi les diamines aliphatiques, linéaires ou ramifiés, les diamines cycloaliphatiques et les diamines alkylaromatiques.

Lorsque la diamine est aliphatique et linéaire, de formule H₂N-(CH₂)ₐ-NH₂, le monomère (diamine en Ca) est préférentiellement choisi parmi la butanediamine (a=4), la pentanediamine (a=5), l'hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13), la tetradécanediamine (a=14), l'hexadécanediamine (a=16), l'octadécanediamine (a=18), l'octadécènediamine (a=18), l'eicosanediamine (a=20), la docosanediamine (a=22) et les diamines obtenues à partir d'acides gras.

Lorsque la diamine est aliphatique et ramifiée, elle peut comporter un ou plusieurs substituants méthyle ou éthyle sur la chaîne principale. Par exemple, le monomère (diamine en Ca) peut avantageusement être choisi parmi la 2,2,4-trimethyl-1,6-hexanediamine, la 2,4,4-trimethyl-1,6-hexanediamine, le 1,3-diaminopentane, la 2-methyl-1,5-pentanediamine, la 2-methyl-1,8-octanediamine.

Lorsque le monomère (diamine en Ca) est cycloaliphatique, il est choisi parmi la bis(3,5-dialkyl-4-aminocyclohexyl)methane, la bis(3,5-dialkyl-4-aminocyclohexyl)ethane, la bis(3,5-dialkyl-4-aminocyclo-hexyl)propane, la bis(3,5-dialkyl-4-aminocyclohexyl)butane, la bis-(3-méthyl-4-aminocyclohexyl)-méthane (BMACM ou MACM), la p-bis(aminocyclohexyl)-methane (PACM) et l'isopropylidenedi(cyclohexylamine) (PACP). Il peut également comporter les squelettes carbonés suivants : norbornyl méthane, cyclohexylméthane, dicyclohexylpropane, di(méthylcyclohexyl), di(methylcyclohexyl) propane. Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

Lorsque le monomère (diamine en Ca) est alkylaromatique, il est choisi parmi la 1,3-xylylène diamine et la 1,4-xylylène diamine.

Le motif (diacide en Cb) est choisi parmi les diacides aliphatiques, linéaires ou ramifiés, les diacides cycloaliphatiques et les diacides aromatiques.

Lorsque le monomère (diacide en Cb) est aliphatique et linéaire, il est choisi parmi l'acide succinique (b=4), l'acide pentanedioïque (b=5), l'acide adipique (b=6), l'acide heptanedioïque (b=7), l'acide octanedioïque (b=8), l'acide azélaïque (b=9), l'acide sébacique (b=10), l'acide undécanedioïque (b=11), l'acide dodécanedioïque (b=12), l'acide brassylique (b=13), l'acide tetradécanedioïque (b=14), l'acide hexadécanedioïque (b=16), l'acide octadécanedioïque (b=18), l'acide octadécènedioïque (b=18), l'acide eicosanedioïque (b=20), l'acide docosanedioïque (b=22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque le diacide est cycloaliphatique, il peut comporter les squelettes carbonés suivants : norbornyl méthane, cyclohexylméthane, dicyclohexylméthane, dicyclohexylpropane, di(méthylcyclohexyl), di(méthylcyclohexyl)propane.

Lorsque le diacide est aromatique, il est choisi parmi l'acide téréphtalique (noté T), isophtalique (noté I) et les diacides naphtaléniques.

De manière plus particulièrement avantageuse, le diacide en Cb du motif A, lorsqu'il répond à la formule (diamine en Ca).(diacide en Cb), est un diacide aliphatique, linéaire ou ramifié, ou un diacide cycloaliphatique.

De préférence, le motif X désigne un motif obtenu à partir d'une diamine comportant un nombre de carbones, noté x compris entre 9 et 36, avantageusement entre 10 et 18 et, plus préférentiellement 10.

Cette diamine peut être aliphatique, linéaire ou ramifiée, cycloaliphatique ou alkylaromatique.

Lorsque la diamine est aliphatique et ramifiée, elle peut comporter un ou plusieurs substituants méthyle ou éthyle sur la chaîne principale. Par exemple, elle peut avantageusement être choisie parmi la 2,2,4-triméthyl-1,6-hexanediamine, la 2,4,4-triméthyl-1,6-hexanediamine et la 2-méthyl-1,8-octanediamine.

Avantageusement, la diamine est aliphatique et linéaire, de formule H₂N-(CH₂)ₓ-NH₂, et choisie parmi la nonanediamine (x=9), la décanediamine (x=10), l'undécanediamine (x=11), la dodécanediamine (x=12), la tridécanediamine (x=13), la tetradécanediamine (x=14), l'hexadécanediamine (x=16), l'octadécanediamine (x=18), l'octadécènediamine (x=18), l'eicosanediamine (x=20), la docosanediamine (x=22) et les diamines obtenues à partir d'acides gras.

De préférence, le motif X désigne un motif obtenu à partir de la 1,10-décanediamine (x=10).

Parmi les combinaisons envisageables, les copolyamides suivants présentent un intérêt particulièrement marqué : il s'agit des copolyamides répondant à l'une des formules choisies parmi 11/10.T, 12/10.T, 6.10/10.T, 6.12/10.T, 10.10/10.T, 10.12/10.T et 12.12/10.T.

De préférence, les proportions molaires en diamine notée X et en acide téréphtalique noté T sont préférentiellement stoechiométriques.

De préférence, le rapport molaire de motif(s) A sur le(s) motif(s) X.T est compris entre 0,05 et 0,5, et de préférence entre 0,1 et 0,4.

Selon un deuxième aspect de l'invention, le copolyamide est un copolymère ne contenant que deux motifs distincts, à savoir un motif A et le motif X.T, préférentiellement 10.T.

Selon un troisième aspect de l'invention, le copolyamide comprend en outre au moins trois motifs distincts et répond à la formule suivante :
A/X.T/Z
dans laquelle
les motifs A et X.T ont la même signification que définie ci-dessus, et
Z est choisi parmi un motif obtenu à partir d'un aminoacide, un motif obtenu à partir d'un lactame et un motif répondant à la formule (diamine en Cd).(diacide en Ce), avec d représentant le nombre d'atomes de carbone de la diamine et e représentant le nombre d'atomes de carbone du diacide, d et e étant chacun compris entre 4 et 36, avantageusement entre 9 et 18.

Lorsque Z représente un motif obtenu à partir d'un aminoacide, il peut être choisi parmi l'acide 9-aminononanoïque (Z=9), l'acide 10-aminodécanoïque (Z=10), l'acide 10-aminoundécanoïque (noté 11), l'acide 12-aminododécanoïque (Z=12) et l'acide 11-aminoundécanoïque (Z=11) ainsi que ses dérivés, notamment l'acide N-heptyl-11-aminoundécanoïque.

A la place d'un aminoacide, on pourrait également envisager un mélange de deux, trois,... ou plusieurs aminoacides. Dans cette éventualité, les copolyamides formés comprendraient alors quatre, cinq,... ou plus, motifs, respectivement.

Lorsque Z représente un motif obtenu à partir d'un lactame, il peut être choisi parmi la pyrrolidinone, la 2-pipéridinone, le caprolactame (Z=6), l'énantholactame, le caprylolactame, le pelargolactame, le décanolactame, l'undecanolactame, et le lauryllactame (Z=12).

A la place d'un lactame, on pourrait également envisager un mélange de deux, trois,... ou plusieurs lactames ou un mélange d'un ou plusieurs aminoacides et d'un ou plusieurs lactames. Dans cette éventualité, les copolyamides formés comprendraient alors quatre, cinq,... ou plus, motifs, respectivement.

Parmi les combinaisons envisageables, les copolyamides suivants présentent un intérêt particulièrement marqué : il s'agit des copolyamides répondant à l'une des formules choisies parmi 11/10.T/12, 11/10.T/6 et 12/10.T/6.

On exclut bien évidemment le cas particulier où le motif Z, lorsqu'il est un motif obtenu à partir un lactame ou un aminoacide est strictement identique au motif A. En effet, dans cette hypothèse particulière, on est en présence du copolyamide déjà envisagé selon le premier aspect de l'invention.

Lorsque le motif Z est un motif répondant à la formule (diamine en Cd).(diacide en Ce), le motif (diamine en Cd) est choisi parmi les diamines aliphatiques, linéaires ou ramifiées, les diamines cycloaliphatiques et les diamines alkylaromatiques.

Lorsque la diamine est aliphatique et linéaire, de formule H₂N-(CH₂)ₐ-NH₂, le monomère (diamine en Cd) est choisi parmi la butanediamine (d=4), la pentanediamine (d=5), la hexanediamine (d=6), l'heptanediamine (d=7), l'octanediamine (d=8), la nonanediamine (d=9), la décanediamine (d=10), l'undécanediamine (d=11), la dodécanediamine (d=12), la tridécanediamine (d=13), la tétradécanediamine (d=14), l'hexadécanediamine (d=16), l'octadécanediamine (d=18), l'octadécènediamine (d=18), l'eicosanediamine (d=20), la docosanediamine (d=22) et les diamines obtenues à partir d'acides gras.

Lorsque la diamine est aliphatique et ramifiée, elle peut comporter un ou plusieurs substituants méthyle ou éthyle sur la chaîne principale. Par exemple, le monomère (diamine en Cd) peut avantageusement être choisi parmi la 2,2,4-triméthyl-1,6-hexanediamine, la 2,4,4-triméthyl-1,6-hexanediamine, le 1,3-diaminopentane, la 2-methyl-1,5-pentanediamine, la 2-méthyl-1,8-octanediamine.

Lorsque le monomère (diamine en Cd) est cycloaliphatique, il est choisi parmi la bis(3,5-dialkyl-4-aminocyclohexyl)méthane, la bis(3,5-dialkyl-4-aminocyclohexyl)éthane, la bis(3,5-dialkyl-4-aminocyclo-hexyl)propane, la bis(3,5-dialkyl-4-aminocyclohexyl)butane, la bis-(3-méthyl-4-aminocyclohexyl)-méthane (BMACM ou MACM), la p-bis(aminocyclohexyl)-méthane (PACM) et l'isopropylidènedi(cyclohexylamine) (PACP). Elle peut également comporter les squelettes carbonés suivants : norbornyl méthane, cyclohexylméthane, dicyclohexylpropane, di(méthylcyclohexyl), di(méthylcyclohexyl) propane. Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

Lorsque le monomère (diamine en Cd) est alkylaromatique, il est choisi parmi la 1,3-xylylène diamine et la 1,4-xylylène diamine.

Le motif (diacide en Ce) est choisi parmi les diacides aliphatiques, linéaires ou ramifiés, les diacides cycloaliphatiques et les diacides aromatiques.

Lorsque le monomère (diacide en Ce) est aliphatique et linéaire, il est choisi parmi l'acide succinique (e=4), l'acide pentanedioïque (e=5), l'acide adipique (e=6), l'acide heptanedioïque (e=7), l'acide octanedioïque (e=8), l'acide azélaïque (e=9), l'acide sébacique (e=10), l'acide undécanedioïque (e=11), l'acide dodécanedioïque (e=12), l'acide brassylique (e=13), l'acide tetradécanedioïque (e=14), l'acide hexadécanedioïque (e=16), l'acide octadécanedioïque (e=18), l'acide octadécènedioïque (e=18), l'acide eicosanedioïque (e=20), l'acide docosanedioïque (e=22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque le diacide est cycloaliphatique, il peut comporter les squelettes carbonés suivants : norbornyl méthane, cyclohexylméthane, dicyclohexylméthane, dicyclohexylpropane, di(méthylcyclohexyl), di(méthylcyclohexyl)propane.

Lorsque le diacide est aromatique, il est choisi parmi l'acide téréphtalique (noté T), isophtalique (noté I) et les diacides naphtaléniques.

On exclut bien évidemment le cas particulier où le motif (diamine en Cd).(diacide en Ce) est strictement identique au motif 10.T ou au motif A, lorsque A a la signification suivante : (diamine en Ca).(diacide en Cb). En effet, dans ces hypothèses particulières, on est également en présence du copolyamide déjà envisagé selon le deuxième aspect de l'invention.

Parmi toutes les combinaisons possibles pour les copolyamides A/10.T/Z, dans lesquelles Z est un motif (diamine en Cd).(diacide en Ce), on retiendra en particulier les copolyamides répondant à l'une des formules choisies parmi 11/10.T/1.0.I, 12/10.T/10.I, 10.10/10.T/10.I, 10.6/10.T/10.I et 10.14/10.T/10.I.

De préférence, lorsque Z désigne un motif (diamine en Cd).(diacide en Ce), le monomère (diacide en Ce) est aliphatique et linéaire. On retiendra en particulier les copolyamides répondant à l'une des formules choisies parmi 11/10.T/10.6 et 12/10.T/10.6.

Dans une version avantageuse de l'invention, le rapport molaire de la somme des motifs A et Z sur le(s) motif(s) 10.T (i.e. (A+Z)/10.T) dans le terpolymère est compris entre 0,1 et 1, et de préférence entre 0,2 et 0,7.

A la place d'un motif (diamine en Cd).(diacide en Ce), on pourrait également envisager un mélange de deux, trois,... ou plusieurs motif (diamine en Cd).(diacide en Ce) ou un mélange d'un ou plusieurs aminoacides et/ou d'un ou plusieurs lactames avec un ou plusieurs motif (diamine en Cd).(diacide en Ce). Dans cette éventualité, les copolyamides formés comprendraient alors quatre, cinq,... ou plus, motifs, respectivement.

Le copolyamide selon l'invention peut comporter des monomères provenant de ressources issues de matières premières renouvelables, c'est-à-dire comportant du carbone organique issu de la biomasse et déterminé selon la norme ASTM D6866. Ces monomères issus de matières premières renouvelables peuvent être la 1,10-décanediamine ou, lorsqu'ils sont présents, notamment l'acide 11-aminoundécanoïque, les diamines et diacides aliphatiques et linéaires tels que définis ci-dessus.

Si, à l'exception de l'acide N-heptyl-11-aminoundécanoïque, les dimères d'acides gras et les diamines cycloaliphatiques, les comonomères ou produits de départ envisagés dans la présente description (aminoacides, diamines, diacides) sont effectivement linéaires, rien n'interdit d'envisager qu'ils puissent en tout ou partie être ramifiés, tel que le 2-méthyl-1,5-diaminopentane, partiellement insaturés.

On notera en particulier que le diacide carboxylique en C18 peut être l'acide octadécanedioïque, qui est saturé, ou bien l'acide octadécènedioïque, qui présente quant-à-lui une insaturation.

Selon la présente invention, les agents de terminaison de chaînes sont des composés capables de réagir avec les fonctions terminales amine et/ou acide carboxylique des polyamides, stoppant ainsi la réactivité de l'extrémité de la macromolécule, et notamment la polycondensation.

La réaction de terminaison peut être illustrée de la façon suivante :

Polyamide-CO₂H + R-NH₂ → Polyamide-CO-NH-R + H₂O

Polyamide-NH₂ + R-CO₂H → Polyamide-NH-CO-R + H₂O

Ainsi, les agents de terminaison de chaînes appropriés pour réagir avec la fonction terminale amine peuvent être des acides monocarboxyliques, des anhydrides, tels que l'anhydride phtalique, des acides monohalogénés, des monoesters ou les monoisocyanates.

De préférence, les acides monocarboxyliques sont utilisés. Ils peuvent être choisis parmi les acides aliphatiques monocarboxyliques, tels que l'acide acétique, l'acide propionique, l'acide lactique, l'acide valérique, l'acide caproïque, l'acide caprique, l'acide laurique, l'acide tridécylique, l'acide myristique, l'acide palmitique, l'acide stéarique, l'acide pivalique et l'acide isobutyrique ; les acides alicycliques, tels que l'acide cyclohexanecarboxylique ; les acides aromatiques monocarboxyliques ; tels que l'acide toluïque, l'acide α-naphthalènecarboxylique, l'acide β-naphthalènecarboxylique, l'acide méthylnaphthalène carboxylique et l'acide phénylacétique; et leurs mélanges. Les composés préférés sont les acides aliphatiques, et notamment l'acide acétique, l'acide propionïque, l'acide lactique, l'acide valérique, l'acide caproïque, l'acide caprique, l'acide laurique, l'acide tridécylique, l'acide myristique, l'acide palmitique et l'acide stéarique.

Parmi les agents de terminaison de chaînes appropriés pour réagir avec la fonction terminale acide, peuvent être cités des monoamines, des monoalcools, des monoisocyanates.

De préférence, les monoamines sont utilisées. Elles peuvent être choisies parmi des monoamines aliphatiques, telles que la méthylamine, l'éthylamine, la propylamine, la butylamine, l'héxylamine, l'octylamine, la décylamine, la laurylamine, la stéarylamine, la diméthylamine, la diéthylamine, la dipropylamine et la dibutylamine; les amines alicycliques, telles que la cyclohexylamine et la dicyclohexylamine; les monoamines aromatiques, telles que l'aniline, la toluidine, la diphénylamine et la naphthylamine; et leurs mélanges.

Les composés préférés sont la butylamine, l'hexylamine, l'octylamine, la décylamine, la laurylamine, la stéarylamine, la cyclohexylamine et l'aniline.

Il est également possible de faire réagir les extrémités acide et/ou amine, respectivement avec des bases minérales comme les hydroxydes alcalins et alcalino-terreux tels que la potasse et la soude, et avec des acides minéraux comme HCl, HNO₃ et H₂SO₄, selon le schéma réactionnel suivant :

Polyamide-CO₂H + KOH → Polyamide-COO⁻K⁺ + H₂O

Polyamide-NH₂ + HCl → Polyamide-NH₃⁺Cl⁻

Un autre objet de l'invention consiste en un procédé de préparation du copolyamide tel que défini ci-dessus. Ce procédé comprend une étape de polycondensation des comonomères tels que définis ci-dessus, en présence des agents de terminaison de chaîne et ce, dans des quantités prédéterminées en fonction du copolyamide particulier souhaité.

Ci-dessous sont décrits des procédés de préparation du copolyamide A/X.T selon l'invention, A étant par exemple un aminoacide.

Bien évidemment, ces modes de mise en oeuvre sont transposables aux cas, dans lesquels A est un lactame ou un mélange (diamine en Ca).(diacide aliphatique en Cb).

Selon un premier mode de mise en oeuvre du procédé selon la présente invention, ledit procédé comprend l'étape unique de réaction entre l'aminoacide A et de la combinaison stoechiométrique de la diamine X et l'acide téréphtalique, en présence d'hypophosphite de sodium, et au moins un agent de terminaison de chaîne, d'eau et éventuellement d'autres additifs.

Selon ce premier mode de réalisation, l'étape unique est effectuée dans une gamme de température comprise entre 200 et 380°C.

Cette étape est effectuée sous une atmosphère inerte et dans une gamme de pression comprise entre 0,01 et 50 bars.

Cette étape est constituée de plusieurs sous-étapes. Au cours de la première sous-étape, le réacteur est maintenu sous une pression autogène de vapeur d'eau comprise entre 10 et 50 bars à un premier palier de température. Au cours de la seconde sous-étape, la pression est progressivement ramenée à la pression atmosphérique et la température est augmentée à un second palier de température. Le temps de réaction est généralement de 30 minutes à 10 heures, et dépend de la température. Plus la température de réaction est élevée, plus le temps de réaction est faible. Le temps de réaction doit être, dans tous les cas, suffisant pour assurer que la réaction s'est produite de façon quantitative.

Les paliers de température se situent dans la gamme de 200 à 380°C définie ci-dessus.

Selon un second mode de mise en oeuvre du procédé selon la présente invention, ledit procédé comprend deux étapes. La première étape conduit à l'obtention d'un oligomère diacide, qui va se polycondenser au cours de la seconde étape avec la diamine, selon l'enchaînement ci-dessous :
- (i) une première étape de réaction entre l'acide téréphtalique, avec l'aminoacide A, en présence d'un sel hypophosphite ; et
- (ii) une seconde étape de réaction de l'oligomère diacide ainsi formé à l'étape précédente avec la diamine en Cx.

Le ou les agents de terminaison de chaînes sont introduits au cours de la première et/ou de la seconde étape.

Dans la première étape de réaction, on prépare l'oligomère diacide par condensation de l'acide téréphtalique, avec l'aminoacide A, en présence d'un sel hypophosphite. La réaction s'effectue en réacteur sous atmosphère inerte, à pression atmosphérique et/ou sous pression en maintenant les réactifs, de préférence sous agitation, à une température comprise entre 140 et 350°C, et de préférence comprise entre 200 et 300°C. La réaction s'effectue généralement en 1 à 5 heures sous pression atmosphérique ou sous une pression maximale de 50 bars.

Dans la seconde étape, on ajoute sous pression atmosphérique, à l'oligomère diacide formé à l'étape précédente, la diamine en Cx que l'on fait réagir à une température comprise entre 200 et 350°C, de préférence 240 et 300°C. La réaction s'effectue généralement en atmosphère inerte en 1 à 10 heures sous vide et/ou à la pression atmosphérique et/ou à une pression maximale de 50 bars.

Le ou les agents de terminaison de chaînes sont introduits au cours de la première et/ou de la seconde étape.

Dans le cas où A est un mélange (diamine en Ca).(diacide en Cb), il est possible d'introduire de 10 à 100% en poids de la diamine en Ca dans la première étape de réaction (i), le reste éventuel de la diamine en Ca étant introduit avec le diacide en Cb dans la seconde étape de réaction (ii).

Selon un troisième mode de mise en oeuvre du procédé selon la présente invention, ledit procédé comprend deux étapes :
- (i) une première étape de réaction de l'aminoacide A avec l'acide téréphtalique, et avec de 10 à 90% en poids de la diamine en Cx, en présence d'un sel hypophosphite ; et
- (ii) une seconde étape de réaction de l'oligomère produit de l'étape (i) avec le solde de la diamine en Cx en une ou plusieurs fois.

Dans les deux étapes, la température est comprise entre 220 et 380°C, de préférence 280 et 330°C. Le procédé est mis en oeuvre sous atmosphère inerte, sous pression jusque 50 bars ou à pression atmosphérique, ou sous vide. La réaction s'effectue généralement en 1 à 10 heures.

Le ou les agents de terminaison de chaînes sont introduits au cours de la première et/ou de la seconde étape.

Dans le cas où A est un mélange (diamine en Ca).(diacide en Cb), il est possible d'introduire de 10 à 100% en poids de la diamine en Ca dans la première étape de réaction (i), le reste éventuel de la diamine en Ca étant introduit avec le diacide aliphatique en Cb dans la seconde étape de réaction (ii).

Selon un quatrième mode de mise en oeuvre du procédé selon la présente invention, ledit procédé comprend deux étapes :
- (i) une première étape de réaction de l'aminoacide A avec l'acide téréphtalique, toute la diamine, en présence d'un sel hypophosphite ; un oligomère est obtenu par vidange du réacteur sous pression de vapeur d'eau et cristallisation dudit oligomère,
- (ii) une seconde étape de post-polymérisation à pression atmosphérique ou sous vide de l'oligomère produit de l'étape (i).

Le ou les agents de terminaison de chaînes sont introduits au cours de la première et/ou de la seconde étape.

Dans la première étape, la température est comprise entre 200 et 300°C, de préférence 220 et 260°C. Le procédé est mis en oeuvre sous atmosphère inerte, sous pression jusqu'à 50 bars. La réaction s'effectue généralement en 1 à 10 heures. Un "prépolymère" est sorti du réacteur, dont le degré d'avancement de la réaction est compris entre 0,4 et 0,99.

Dans la seconde étape, la température est comprise entre 220 et 380°C, de préférence 280 et 330°C. Le procédé est mis en oeuvre sous atmosphère inerte, sous pression atmosphérique ou sous vide. La réaction s'effectue généralement en quelques secondes et jusqu'à plusieurs dizaines d'heures selon la température de polymérisation.

Le ou les agents de terminaison de chaînes sont introduits au cours de la première et/ou de la seconde étape.

Ce prépolymère peut être repris directement ou avec un stockage intermédiaire sous forme solide (granulé ou poudre par exemple), afin d'effectuer la fin de la polycondensation. Cette opération est dite : remontée en viscosité. Cette remontée en viscosité peut être effectuée sur un réacteur de type extrudeuse sous pression atmosphérique ou sous vide. Cette remontée en viscosité peut aussi, dans le cas des copolyamides cristallins ou semi-cristallins, être effectuée en phase solide, à une température située entre la température de transition vitreuse (Tg) et la température de fusion. Classiquement, il s'agit d'une température d'environ 100°C au-dessus de la Tg. Le chauffage peut être assuré par un gaz ou fluide caloporteur, tel que l'azote, la vapeur d'eau ou des liquides inertes comme certains hydrocarbures.

Les procédés selon la présente invention peuvent être mis en oeuvre dans tout réacteur classiquement utilisé en polymérisation, tel que des réacteurs à agitateurs à ancre ou à rubans. Cependant, lorsque le procédé comporte une étape (ii), telle que définie ci-dessus, il peut aussi être mise en oeuvre dans un réacteur horizontal ou finisseur, plus communément appelé par l'homme de l'art "finisher". Ces finishers peuvent être équipés de dispositif de mise sous vide, d'introduction de réactif (ajout de diamine), qui peut être étagé ou non, et peuvent fonctionner dans un large intervalle de température.

Il est possible d'ajouter, à ces copolyamides, à l'issue du procédé ou au cours de la seconde étape, lorsque le procédé comporte deux étapes, outre le solde de diamine, des additifs habituels des polyamides, tels que les charges, les fibres de verre, les colorants, les stabilisants, notamment UV, les plastifiants, les modifiants chocs, les agents tensioactifs, les pigments, les azurants, les anti-oxydants, les cires naturelles, les polyoléfines, et leurs mélanges.

Les charges envisagées dans le cadre de la présente invention incluent les charges minérales classiques, telles que les charges choisies dans le groupe, donné à titre non-limitatif, comprenant: kaolin, magnésie, scories, etc., fibres de verre. La charge utilisée plus généralement est formée de fibres de verre, dont la dimension est avantageusement comprise entre 0,20 et 25 mm. On peut y inclure un agent de couplage pour améliorer l'adhésion des fibres au polyamide, tels que les silanes ou les titanates, qui sont connus de l'homme de l'art. Des charges anioniques peuvent également être utilisées, telles que le graphite ou les fibres aramides (polyamides entièrement aromatiques).

De préférence, les additifs au copolyamide préparé selon la présente invention se présentent en une quantité jusqu'à 90%, de préférence de 1 à 60%, de préférence de l'ordre de 30% en poids par rapport au poids de la composition.

De préférence, les fibres de verre sont présentes dans la composition généralement en une teneur de 10 à 50%, de préférence l'ordre de 30% en poids par rapport au poids total de la composition.

L'invention se rapporte également à une composition comprenant au moins un copolyamide selon l'invention.

Une composition conforme à l'invention peut en outre comprendre au moins un deuxième polymère.

Avantageusement, ce deuxième polymère peut être choisi parmi un polyamide semi-cristallin, un polyamide amorphe, un copolyamide semi-cristallin, un copolyamide amorphe, un polyétheramide, un polyesteramide, un polyester aromatique, un arylamide et leurs mélanges.

Ce deuxième polymère peut également être choisi parmi l'amidon, qui peut être modifié et/ou formulé, la cellulose ou ses dérivés comme l'acétate de cellulose ou les éthers de cellulose, le polyacide lactique, le polyacide glycolique et les polyhydroxyalcanoate.

En particulier, ce deuxième polymère peut être une ou plusieurs polyoléfines fonctionnelles ou non fonctionnelles, réticulées ou non.

S'agissant des polyoléfines réticulées, cette phase peut provenir de la réaction (i) de deux polyoléfines ayant des groupes réactifs entre eux, (ii) de polyoléfines maléisées avec une molécule diamino monomérique, oligomérique ou polymérique ou (iii) d'une (ou plusieurs) polyoléfine insaturée porteur d'insaturation et réticulable par exemple par voie peroxyde.

Parmi les voies de réaction (i), (ii) et (iii) citées, c'est la réaction de deux polyoléfines (i) qui est privilégiée, la phase réticulée correspondante provenant par exemple de la réaction :
- d'un produit (A) comprenant un époxyde insaturé,
- d'un produit (B) comprenant un anhydride d'acide carboxylique insaturé,
- éventuellement d'un produit (C) comprenant un acide carboxylique insaturé ou d'un acide alpha-oméga-aminocarboxylique.

### Produit A

A titre d'exemple de produit (A), on peut citer ceux contenant de l'éthylène et un époxyde insaturé.

Selon une première forme de l'invention, (A) est soit une polyoléfine greffée par un époxyde insaturé, soit un copolymère de l'éthylène et d'un époxyde insaturé.

* S'agissant de la polyoléfine greffée par un époxyde insaturé, on entend par polyoléfine les polymères comprenant des motifs oléfines, tels que par exemple des motifs éthylène, propylène, butène-1, ou tout autre alpha-oléfine. A titre d'exemple, on peut citer :
- les polyéthylènes tels que les LDPE, HDPE, LLDPE ou VLDPE, le polypropylène, les copolymères éthylène/propylène, les EPR (éthylène/propylène Rubber) ou encore les PE métallocènes (copolymères obtenus par catalyse monosite),
- les copolymères blocs styrène/éthylène-butène/styrène (SEBS), les copolymères blocs styrène/butadiène/styrène (SBS), les copolymères blocs styrène/isoprène/styrène (SIS), les copolymères blocs styrène/éthylène-propylène/styrène, les éthylène/propylène/diène (EPDM) ;
- les copolymères de l'éthylène avec au moins un produit choisi parmi les sels
- ou les esters d'acides carboxyliques insaturés, ou les esters vinyliques d'acides carboxyliques saturés.

Avantageusement, la polyoléfine est choisie parmi le LLDPE, le VLDPE, le polypropylène, les copolymères éthylène/acétate de vinyle ou les copolymères éthylène/(méth)acrylate d'alkyle. La densité peut être avantageusement comprise entre 0,86 et 0,965, l'indice de fluidité (MFI) peut être compris entre 0,3 et 40 (en g/10 min à 190°C sous 2,16 kg).

* S'agissant des copolymères de l'éthylène et d'un époxyde insaturé, on peut citer par exemple les copolymères de l'éthylène d'un (méth)acrylate d'alkyle et d'un époxyde insaturé ou les copolymères de l'éthylène, d'un ester vinylique d'acide carboxylique saturé et d'un époxyde insaturé. La quantité époxyde peut être jusqu'à 15 % en poids du copolymère et la quantité d'éthylène d'au moins 50 % en poids.

Avantageusement, (A) est un copolymère de l'éthylène d'un (méth)acrylate d'alkyle et d'un époxyde insaturé.

De préférence, le (méth)acrylate d'alkyle est tel que l'alkyle possède 2 à 10 atomes de carbone.

Le MFI (indice de fluidité à l'état fondu) de (A) peut être par exemple entre 0,1 et 50 (g/10 min à 190°C sous 2,16 kg).

Des exemples d'acrylate ou méthacrylate d'alkyle utilisables sont notamment le méthacrylate de méthyle, l'acrylate d'éthyle, l'acrylate de n-butyle, l'acrylate d'isobutyle, l'acrylate de 2-éthylhexyle. Des exemples d'époxydes insaturés utilisables sont notamment :
- les esters et éthers de glycidyle aliphatiques tels que l'allylglycidyléther, le vinylglycidyléther, le maléate et l'itaconate de glycidyle, l'acrylate et le méthacrylate de glycidyle, et
- les esters et éthers de glycidyle alicycliques tels que le 2-cyclohexène-1-glycidyléther, le cyclohexène-4,5-diglycidyl carboxylate, le cyclohexène-4-glycidyl carboxylate, 5-norbornène-2-méthyl-2-glycidyl carboxylate et endocis-bicyclo(2,2,1)-5-heptène-2,3-diglycidyl dicarboxylate.

Selon une autre forme de l'invention, le produit (A) est un produit ayant deux fonctions époxyde, tel que par exemple le diglycidyl éther du bisphénol A (DGEBA).

### Produit B

A titre d'exemple de produit (B), on peut citer ceux contenant de l'éthylène et un anhydride d'acide carboxylique insaturé.

(B) est soit un copolymère de l'éthylène et d'un anhydride d'acide carboxylique insaturé, soit une polyoléfine greffée par un anhydride d'acide carboxylique insaturé.

La polyoléfine peut être choisie parmi les polyoléfines citées plus haut et devant être greffées par un époxyde insaturé.

Des exemples d'anhydrides d'acide dicarboxylique insaturé utilisables comme constituants de (B) sont notamment l'anhydre maléique, l'anhydride itaconique, l'anhydride citraconique, l'anhydride tétrahydrophtalique.

A titre d'exemples, on peut citer les copolymères de l'éthylène, d'un (méth)acrylate d'alkyle, d'un anhydride d'acide carboxylique insaturé et les copolymères de l'éthylène, d'un ester vinylique d'acide carboxylique saturé et d'un anhydride d'acide carboxylique insaturé.

La quantité d'anhydre carboxylique insaturé peut être jusqu'à 15 % en poids du copolymère et la quantité d'éthylène d'au moins 50 % en poids.

Avantageusement, (B) est un copolymère de l'éthylène d'un (méth)acrylate d'alkyle et d'un anhydride carboxylique insaturé. De préférence, le (méth)acrylate d'alkyle est tel que l'alkyle possède 2 à 10 atomes de carbone.

Le (méth)acrylate d'alkyle peut être choisi parmi ceux cités plus haut.

Le MFI de (B) peut être par exemple entre 0,1 et 50 (g/10 min à 190 °C sous 2,16 kg).

Selon une autre forme de l'invention, (B) peut être choisi parmi les acides polycarboxyliques aliphatiques, alicycliques ou aromatiques, leurs anhydrides partiels ou totaux.

A titre d'exemples d'acides aliphatiques, on peut citer l'acide succinique, l'acide glutarique, l'acide pimélique, l'acide azélaique, l'acide sébacique, l'acide adipique, l'acide dodécanedicarboxylique, l'acide octadécanedicarboxylique, l'acide dodécènesuccinique et l'acide butanetétracarboxylique.

A titre d'exemples d'acides alicycliques, on peut citer l'acide cyclopentanedicarboxylique, l'acide cyclopentanetricarboxylique, l'acide cyclopentanetétracarboxylique, l'acide cyclohexane dicarboxylique, l'acide hexane tricarboxylique, l'acide méthylcyclopentane dicarboxylique, l'acide tétrahydrophtalique, l'acide endométhylènetétrahydrophtalique et l'acide méthylèndométhylène-tétrahydrophtalique.

A titre d'exemples d'acides aromatiques, on peut citer l'acide phtalique, l'acide isophtalique, l'acide téréphtalique, l'acide triméllitique, l'acide trimésique, l'acide pyromellitique.

A titre d'exemples d'anhydrides, on peut citer les anhydrides partiels ou totaux des acides précédents.

On utilise avantageusement l'acide adipique.

On ne sortirait pas du cadre de l'invention, si une partie du copolymère (B) est remplacée par un copolymère éthylène-acide acrylique ou un copolymère éthylène - anhydride maléique, l'anhydride maléique ayant été en tout ou partie hydrolysé. Ces copolymères peuvent aussi comprendre un (méth)acrylate d'alkyle. Cette partie peut représenter jusqu'à 30% de (B).

### Produit C

Quant au produit (C) comprenant un acide carboxylique insaturé, on peut citer à titre d'exemple les produits (B) hydrolysés en tout ou partie. (C) est par exemple un copolymère de l'éthylène et d'un acide carboxylique insaturé et avantageusement un copolymère de l'éthylène et de l'acide (méth)acrylique.

On peut encore citer les copolymères de l'éthylène, d'un (méth)acrylate d'alkyle et de l'acide acrylique.

Ces copolymères ont un MF1 entre 0,1 et 50 (g/10 min à 190°C sous 2,16 kg).

La quantité d'acide peut être jusqu'à 10 % en poids et de préférence 0,5 à 5 %. La quantité de (méth)acrylate est de 5 à 40 % en poids.

(C) peut aussi être choisi parmi les acides alpha-oméga-aminocarboxyliques, tels que par exemple NH₂-(CH₂)₅COOH, NH₂-(CH₂)₁₀COOH et NH₂(CH₂)₁₁-COOH et de préférence l'acide aminoundécanoïque.

La proportion de (A) et (B) nécessaire pour former la phase réticulée est déterminée selon les règles habituelles de l'art par le nombre de fonctions réactives présentes dans (A) et dans (B).

Par exemple, dans les phases réticulées contenant (C) choisies parmi les acides alpha-oméga-aminocarboxyliques, si (A) est un copolymère de l'éthylène d'un (méth)acrylate d'alkyle et d'un époxyde insaturé et (B) un copolymère de l'éthylène, d'un (méth)acrylate d'alkyle et d'un anhydride d'acide carboxylique insaturé, les proportions sont telles que le rapport entre les fonctions anhydride et les fonctions époxy soit voisin de 1.

La quantité d'acide alpha-oméga-aminocarboxylique est alors de 0,1 à 3 %, et de préférence 0,5 à 1,5 % de (A) et (B).

S'agissant de (C) comprenant un acide carboxylique insaturé, c'est-à-dire (C) étant choisi, par exemple parmi les copolymères éthylène/(méth)acrylate d'alkyle/acide acrylique, la quantité de (C) et (B) peut être choisie de telle sorte que le nombre de fonctions acide et de fonctions anhydride soit au moins égal au nombre de fonctions époxyde, et avantageusement on utilise des produits (B) et (C) tels que (C) représente 20 à 80 % en poids de (B) et de préférence 20 à 50 %.

On ne sortirait pas du cadre de l'invention, si on ajoutait un catalyseur.

Ces catalyseurs sont généralement utilisés pour les réactions entre les époxy et les anhydrides.

Parmi les composés capables d'accélérer la réaction entre la fonction époxy présente dans (A) et la fonction anhydride ou acide présente dans (B), on peut citer notamment :
- des amines tertiaires, telles que la diméthyllaurylamine, la diméthylstéarylamine, la N-butylmorpholine, la N,N-diméthyl cyclohexylamine, la benzyldiméthylamine, la pyridine, la diméthyl amino-4-pyridine, le méthyl-1-imidazole, la tétraméthyléthyl hydrazine, la N,N-diméthylpipérazine, la N,N,N',N'-tétraméthyl-1,6-hexanediamine, un mélange d'amines tertiaires ayant de 16 à 18 carbones et connues sous l'appellation de diméthylsuifamine ;
- le 1,4-diazabicyclo[2,2,2]octane (DABCO) ;
- des phosphines tertiaires telles que la triphénylphosphine ;
- des alkyldithiocarbamates de zinc.

La quantité de ces catalyseurs est avantageusement de 0,1 à 3 %, et de préférence 0,5 à 1 % de (A) + (B) + (C).

De préférence, les polyoléfines réticulées sont présentes dans la composition généralement en une teneur de 5 à 50%, de préférence l'ordre de 30% en poids par rapport au poids total de la composition.

S'agissant des polyoléfines non réticulées, on peut citer les polyoléfines décrites dans les paragraphes précédents et destinées à être greffées par des groupes réactifs. On peut encore citer les produits (A) ou (B) ou (C) du paragraphe précédent, mais utilisés seuls pour ne pas réticuler. A titre d'exemple, on peut citer les élastomères EPR, EPDM ces élastomères pouvant être greffés pour faciliter leur compatibilisation avec le copolyamide. On peut encore citer les élastomères acryliques, par exemple ceux du type NBR, HNBR, X-NBR.

La composition selon l'invention peut également comprendre en outre au moins un additif, comme précédemment mentionné dans le cadre du procédé de préparation du copolyamide.

Bien entendu, l'homme du métier choisira le ou les agents de terminaison de chaîne en fonction de la nature chimique du ou des additifs afin d'éviter ou contrôler de potentielles réactions entre le ou les additifs et le ou les agents de terminaison de chaîne.

Le copolyamide selon l'invention ou encore la composition selon l'invention peut être utilisé(e) pour constituer une poudre ou bien des granulés. Le copolyamide selon l'invention ou encore la composition selon l'invention peut également être utilisé(e) pour constituer une structure pour des utilisations ou des transformations ultérieures.

Cette structure peut être monocouche lorsqu'elle n'est formée que du copolyamide ou que de la composition selon l'invention.

Cette structure peut également être une structure multicouche, lorsqu'elle comprend au moins deux couches et que l'une au moins des différentes couches formant la structure est formée du copolyamide ou de la composition selon l'invention.

La poudre, les granulés ou bien la structure, qu'elle soit monocouche ou multicouche, peuvent se présenter sous la forme de fibres (par exemple pour former un tissé ou un non tissé), d'un film, d'un tube, de filaments, d'un objet moulé, d'un objet tridimensionnel obtenu par technologie d'agglomération de poudre par fusion ou frittage provoqué par un rayonnement, d'un corps creux ou d'une pièce injectée.

Par exemple, les films et feuilles peuvent être utilisés dans des domaines aussi variés que celui de l'électronique ou de la décoration.

Le copolyamide selon l'invention ou la composition selon l'invention peut avantageusement être envisagé(e) pour la réalisation de tout ou partie d'éléments de biens d'équipements électriques et électroniques, tels que solénoïdes encapsulés, pompes, téléphone, ordinateur, systèmes multimédias, des équipements automobiles tels que tubes, connecteurs de tubes, pompes, des pièces injectées sous capot moteur, du matériel chirurgical, de l'emballage ou encore des articles de sport ou de loisirs, tels dans les équipements de vélo (selle, pédales).

Plus particulièrement, ces éléments d'équipements automobiles, lorsqu'ils présentent la forme de tubes et/ou de connecteurs, peuvent en particulier être utilisés dans des dispositifs d'admission d'air, de refroidissement (par exemple par air, liquide de refroidissement,...), de transport ou transfert de carburants ou de fluides (tels que huile, eau,...). De tels éléments peuvent bien évidemment être rendus antistatiques ou conducteurs, par addition préalable de quantités adaptées de charges conductrices (telles que noir de carbone, fibres de carbone, nanotubes de carbone,...) dans le copolyamide ou la composition selon l'invention.

Le copolyamide selon l'invention ou la composition selon l'invention peut également être envisagé(e) pour la réalisation de tout ou partie d'éléments d'équipement (notamment tubes, tuyaux, connecteurs, pompes,...) de transport ou transfert de gaz, de pétrole et de ses composés, en particulier destinés à une utilisation dans le domaine de l'Off Shore.

A titre d'exemples, lorsque le copolyamide selon l'invention ou la composition selon l'invention se trouve sous forme de poudre, cette dernière peut être utilisée dans des revêtements, et notamment les revêtements à résistance thermique améliorée destinés à recouvrir des pièces métalliques utilisées dans le transport de fluides (eau, produits chimiques , pétrole et gaz, ...), utilisées dans le domaine automobile, par exemple sous capot moteur, ou utilisées dans le domaine industriel, notamment les pièces de moteur. Les poudres selon l'invention peuvent également être utilisées en tant qu'additifs et/ou charges à tenue thermique améliorée dans des peintures nécessitant une température de cuisson élevée, c'est-à-dire supérieure à 180°C. Ces poudres peuvent être utilisées dans les compositions anti-corrosion, dans les compositions anti-abrasion, et/ou dans les peintures. Les poudres selon l'invention peuvent encore être utilisées dans les technologies d'agglomération de poudre par fusion ou frittage provoqué par un rayonnement, tel que par exemple un faisceau laser (« laser sintering ») ou un faisceau infrarouge (« IR sintering »), pour fabriquer des objets. Lesdites poudres peuvent en outre être utilisées comme additifs pour le papier, ou bien dans les gels d'électrophorèse, ou en tant qu'espaceurs dans les matériaux composites multicouches, notamment entre les couches de matériaux multicouches. Leurs utilisations dans l'industrie de l'emballage, des jouets, du textile, l'automobile, l'électronique, les cosmétiques, la pharmacie et la parfumerie sont envisageables.

A titre d'exemples, les granulés comprenant le copolyamide selon l'invention ou la composition selon l'invention sont utilisés pour la fabrication, notamment par extrusion, de filaments, de tubes, de films et/ou d'objets moulés.

D'autres buts et avantages de la présente invention apparaîtront à la lecture des exemples suivants donnés à titre nullement limitatif.

### EXEMPLES :

### 1/ Exemples de synthèse

La décanediamine - 111.82 g (0,65 mol), l'acide téréphtalique - 104.57 g (0,63 mol), l'acide amino-11-undécanoïque - 87.00 g (0,43 mol), l'acide stéarique - 6,00g (0,021mol), l'hypophosphite de sodium à 60% dans l'eau - 0.40 g (0,0022 mol) et de l'eau - 30 g sont introduits dans un réacteur autoclave de 1 litre. Après élimination de l'oxygène gazeux par inertage à l'azote, le réacteur est porté à une température de 220°C matière, sous une pression de 20 bars. La température est progressivement augmentée en 1 heure jusqu' à 260°C en maintenant cette pression constante. La pression est ensuite progressivement amenée par détente à pression atmosphérique en 1 heure, tandis que la température matière est augmentée à 280°C. La polymérisation se poursuit à cette température pendant 30 minutes. Le polyamide est extrait du réacteur, refroidi dans l'eau et granulé. On obtient environ 270g de polyamide.

Un polyamide de viscosité inhérente égale à 1.14 est obtenu.

La RMN indique un rapport molaire amide tertiaire/amide secondaire aromatique de 0.92 % et l'indice de polymolécularité obtenu par GPC est de 2.75.

Les teneurs en fins de chaînes en COOH sont de 7 µeq/g.

Les teneurs en fins de chaînes en NH2 sont de 76 µeq/g.

Les teneurs en fins de chaînes en CH3 sont de 85 µeq/g.

D'autres exemples de polyamides figurent dans le tableau ci-dessous. Ils sont préparés selon le procédé décrit ci-dessus.
- Le rapport molaire amide aromatique tertiaire/amide aromatique secondaire, noté RMN Amide T/S dans le tableau, est obtenu par RMN.
- L'indice de polymolécularité est obtenu par GPC (Gel Permeation Chromatography) selon les conditions expérimentales suivantes :
   Appareillage : Waters Alliance 2695 instrument
   Solvant : HexaFluoroIsoPropanol stabilisé avec 0,05 M trifluoroacétate de potassium (KTFA).
   Débit : 1ml/minute
   Température des colonnes : 40°C
   Jeu de deux colonnes chez PSS :PFG 1000Å et PFG 100Å
   Concentration des échantillons : 1 g/L (dissolution à température ambiante pendant 24h)
   Volume d'injection: 100 µl.
   L'appareil est équipé d'un détecteur réfractométrique Waters 2414.
   Détection réfractométrique à 40°C
   Détection UV à 228 nm
   Etalonnage PMMA de 1900000 à 402 g.mol-1.

L'indice de polymolécularité est déterminé comme étant égal au rapport entre masse moléculaire en poids et en nombre Mw/Mn.
- La viscosité inhérente (notée η) est mesurée dans le m-crésol, à 20°C, au moyen d'un tube micro-Ubbelohde SCHOTT type 538-23 IIC.
- La teneur en fin de chaîne est mesurée par RMN (Résonance Magnétique Nucléaire). L'échantillon est placé à température ambiante dans le dichlorométhane-d2 avec ajout d'anhydride trifluoroacétique pendant 16 heures, afin de solubiliser le polymère. La concentration est de l'ordre de 20 mg/ml.

Un spectre de RMN du proton est réalisé à une fréquence de 400 MHz sur un Avance Bruker 400 (pulse 30°, temps d'acquisition + temps de répétition = 10 secondes), à température ambiante (stabilisée à 27°C). Les teneurs en fins de chaîne sont directement calculées à partir des raies correspondantes lues sur le spectre.

| | 10.T en mol | 11 en mol | Excès AT (% mass) | Excès OA 10 (% mass) | Ac Stéar (% mass | Ip | CH₃ (µéq/g) | NH₂ (µéq/g) | CO₂H (µéq/ g) | Vise. Inh. |
|---|---|---|---|---|---|---|---|---|---|---|
| A invention | 1 | 0,7 | - | 1,05 | 2,50 | 2,88 | 105 | 37 | 44 | 1,17 |
| B Compa-ratif | 1 | 0,7 | 0,6 | - | 0,50 | 2,88 | 22 | 11 | 118 | 1,16 |
| C Compa-ratif | 1 | 0,7 | - | 1,2 | - | 2,94 | - | 135 | 26 | 1,23 |
| D Compa-ratif | 1 | 0,7 | - | - | - | 2,76 | - | 49 | 93 | 1,22 |

En particulier, l'essai B (comparatif) correspond à l'Exemple 1 décrit dans le document EP 1 505 099 A1.

L'essai D a dû être stoppé avant d'avoir atteint la pression atmosphérique. Le produit sorti du réacteur est plein de bulles et ne peut être granulé correctement. Ceci est dû à la trop grande réactivité du polyamide en l'absence d'une limitation de chaîne suffisante.

Les autres essais ont été polymérisés correctement et des granulés ne présentant pas de bulles ont été obtenus. Pour ce faire, le contrôle des fins de chaîne acide, amine et/ou non réactive a été imposé. Il ressort du tableau précédent que la quantité des fins de chaîne non réactives est avantageusement supérieure à la quantité des fins de chaînes réactives acide et amine.

### 2/ Formulation des polyamides : Etude de l'impact des terminaisons de chaînes mono fonctionnelles.

### 2.1 Etude au cours de la formulation

Les polyamides définis dans le tableau ci-dessus ont été mélangés dans un co-malaxeur BUSS avec environ 30% de fibre de verre cs ft 692 de Asahi et 1,4% d'un additif antioxydant Iodine 201 de Ciba. Des barreaux de ces formulations ont été injectés suivant la norme Iso 179.

En mélangeant dans le malaxeur de type BUSS avec 30% de fibre de verre, le copolyamide C (comparatif) est très difficile à formuler (20 bars de pression en tête avec des casses de joncs) puis à injecter.

Le copolyamide A selon l'invention est beaucoup plus fluide (10 bars en pression en tête), se moule parfaitement bien à 280°C.

| polyamide | A invention | B Comparatif (forte teneur en acide) | C Comparatif (forte teneur en amine) |
|---|---|---|---|
| Visc. Inh. Après formulation | 1,15 | 1,06 | 1,27 |
| Δ viscosité | **-0,02** | -0,1 | +0,04 |
| Ip | 3,13 | 3,2 | 3,43 |

Ces résultats permettent de mettre en évidence les points suivants :
- un polyamide comportant une teneur en fin de chaîne amine trop importante, tel que le polyamide C voit sa viscosité nettement augmenter lors de la formulation, il voit également son indice de polymolécularité augmenter de manière importante.
- un polyamide comportant une teneur en fin de chaîne acide trop importante, tel que les polyamides B voit sa viscosité baisser fortement lors de la formulation.

Ces résultats montrent que les caractéristiques du polyamide A selon l'invention permettent de conduire à un matériau stable en viscosité en en masse moléculaire au cours de sa formulation.

### 2.2 Etude des matériaux

Une partie de ces barreaux est conservée pour l'expérience 1, et l'autre partie est conservée pour l'expérience 2.

### expérience 1 : Choc initial

Les barreaux sont conditionnés à -40°C pendant au moins 2 heures. Ils sont ensuite testés en choc pendulaire Charpy ISO 179-leU avec un pendule de 7.5 Joules. On mesure l'énergie absorbée par les barreaux, exprimée en kJ/m².

### expérience 2 : Choc après vieillissement

Les barreaux sont placées dans des autoclaves de 1,5 litre (à raison de 16 barreaux par autoclave) contenant 1,4 litre d'essence E85 (constituée de 85% d'éthanol Rectapur et 15% de fluide L, une essence de type sans plomb 95). Ces autoclaves sont placées dans des étuves ventilées à 140°C pendant 168 heures. Après refroidissement, ces barreaux, sont immédiatement conditionnés à -40°C pendant au moins 2 heures.

Les barreaux non entaillés sont ensuite testés en choc pendulaire Charpy ISO 179-leU avec un pendule de 7.5 Joules, de manière identique à l'expérience 1. On mesure l'énergie absorbée par les barreaux, exprimée en kJ/m².

Les résultats sont décrits dans le tableau suivant :

| polyamide | A Invention | B | C |
|---|---|---|---|
| Ip | 3,13 | 3,2 | 3,43 |
| Exp 1 | 52,9 | 80,4 | 71,7 |
| Exp 2 | 96,1 | 69,8 | 127,6 |
| Ip après 166h | 3,28 | - | 5,42 |

Le tableau ci-dessus permet de conduire aux conclusions suivantes :
- Concernant le polyamide B présentant un excès de fins de chaînes acide, la tenue au choc après vieillissement chimique (expérience 2) est mauvaise (diminution de la valeur).
- Concernant le polyamide C présentant un excès de fins de chaînes amine, la tenue au choc après vieillissement chimique (expérience 2) est bonne, mais l'indice de polymolécularité du polyamide a augmenté au cours du vieillissement. Ainsi, ce produit évolue sensiblement dans le temps en se ramifiant.
- Un équilibre de fins de chaînes NH2 et COOH montre une stabilité dans le temps des propriétés de résistance au choc et de l'indice de polymolécularité.

## Revendications

1. Copolyamide comprenant au moins deux motifs distincts répondant à la formulation générale suivante :
A/X.T
A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18 ;
X.T désigne un motif obtenu à partir de la polycondensation d'une diamine en Cx et de l'acide téréphtalique, avec x représentant le nombre d'atomes de carbone de la diamine en Cx, x étant compris entre 9 et 36, avantageusement entre 10 et 18,
**Caractérisé en ce que** ledit copolyamide présente :
- une teneur en fins de chaîne amine supérieure ou égale à 20µeq/g,
- une teneur en fins de chaîne acide inférieure ou égale à 100 µeq/g, et
- une teneur en fins de chaîne non réactive supérieure ou égale à 20 µeq/g.

2. Copolyamide selon la revendication 1, caractérisé en ce la teneur en fins de chaîne amine est comprise entre 25 et 100 µeq/g, et de préférence comprise entre 30 et 58 µeq/g.

3. Copolyamide selon la revendication 1 ou 2, caractérisé en ce la teneur en fins de chaîne acide est comprise entre 2 et 80 µeq/g, et de préférence comprise entre 15 et 50 µeq/g.

4. Copolyamide selon l'une quelconque des revendications 1 à 3, caractérisé en ce la teneur en fins de chaîne non réactive est supérieure ou égale à 30µeq/g, et de préférence comprise entre 35 et 200 µeq/g.

5. Copolyamide selon l'une quelconque des revendications 1 à 4, **caractérisé en ce qu'**il comprend au moins un troisième motif et répond à la formulation générale suivante :
A/X.T/Z
dans laquelle
les motifs A et X.T sont tels que définis à la revendication 1,
Z étant choisi parmi un motif obtenu à partir d'un aminoacide, un motif obtenu à partir d'un lactame et un motif répondant à la formule (diamine en Cd).(diacide en Ce), avec d représentant le nombre d'atomes de carbone de la diamine et e représentant le nombre d'atomes de carbone du diacide, d et e étant chacun compris entre 4 et 36, avantageusement entre 9 et 18.

6. Copolyamide selon l'une quelconque des revendications 1 à 5, **caractérisé en ce que** le motif X désigne un motif obtenu à partir de la 1,10-décanediamine.

7. Copolyamide selon l'une quelconque des revendications 1 à 6, **caractérisé en ce que** le motif A désigne un motif obtenu à partir d'un monomère choisi parmi l'acide 10-aminoundécanoïque (noté 11), l'acide amino-11-undécanoïque (noté 11), l'acide amino-12-dodécanoïque (noté 12) et le lauryllactame (noté L12).

8. Copolyamide selon l'une quelconque des revendications 1 à 6, **caractérisé en ce que** le diacide en Cb du motif A, lorsqu'il répond à la formule (diamine en Ca).(diacide en Cb), est un diacide (cyclo)aliphatique.

9. Copolyamide selon l'une quelconque des revendications 1 à 8, **caractérisé en ce qu'**il est de formule, 11/10.T, 12/10.T, 11/10.T/12, 11/10.T/6 et 12/10.T/6, 11/10.T/10.I, 11/10.T/10.6, 12/10.T/10.I, et 12/10.T/10.6.

10. Procédé de préparation du copolyamide tel que défini à l'une quelconque des revendications 1 à 9, **caractérisé en ce qu'**il comprend une étape de polycondensation des comonomères : monomères conduisant aux motifs A et X tels que définis à la revendication 1, l'acide téréphtalique, et éventuellement monomère conduisant au motif Z tel que défini à la revendication 5, et d'au moins un agent de terminaisons de chaîne.

11. Composition comprenant au moins un copolyamide tel que défini à l'une quelconque des revendications 1 à 9.

12. Composition selon la revendication 11, **caractérisée en ce qu'**elle comprend une polyoléfine réticulée choisie parmi les polymères obtenus par réaction
- d'un produit (A) comprenant un époxyde insaturé,
- d'un produit (B) comprenant un anhydride d'acide carboxylique insaturé,
- éventuellement d'un produit (C) comprenant un acide carboxylique insaturé ou d'un acide alpha-oméga-aminocarboxylique.

13. Composition selon la revendication 11 ou 12, **caractérisée en ce qu'**elle comprend au moins un additif choisi parmi les charges, les fibres de verre, les colorants, les stabilisants, notamment UV, les plastifiants, les modifiants chocs, les agents tensioactifs, les pigments, les azurants, les anti-oxydants, les cires naturelles, les polyoléfines, et leurs mélanges.

14. Utilisation d'un copolyamide tel que défini à l'une quelconque des revendications 1 à 9 ou d'une composition telle que définie à la revendication 11 à 13 pour constituer une poudre, des granulés, une structure monocouche ou au moins une couche d'une structure multicouche.

15. Utilisation selon la revendication 14, **caractérisée en ce que** la poudre, les granulés, la structure monocouche ou bien la structure multicouche se présentent sous la forme de fibres, d'un film, d'un tube, de filaments, d'un objet moulé, d'un objet tridimensionnel obtenu par une technologie d'agglomération de poudre par fusion ou frittage provoqué par un rayonnement, d'un corps creux ou d'une pièce injectée.

16. Utilisation selon la revendication 14 ou 15, en tant qu'additif et/ou charge dans les peintures ; dans les revêtements, dans les compositions anti-corrosion, dans les compositions anti-abrasion ; dans les technologies d'agglomération de poudre par fusion ou frittage provoqué par un rayonnement pour fabriquer des objets ; pour le papier ; dans les gels d'électrophorèse ; dans les matériaux composites multicouches ; dans l'industrie de l'emballage ; les jouets ; le textile ; l'automobile ; l'électronique ; les cosmétiques ; la pharmacie et la parfumerie.

17. Utilisation selon la revendication 16, en tant qu'additif dans les revêtements à résistance thermique améliorée pour pièces métalliques utilisées dans le transport de fluides, dans le domaine automobile, sous capot moteur, dans le domaine industriel et/ou dans les pièces de moteur.
